# EUROPÄISCHE PATENTSCHRIFT

(11) **EP 2 527 296 B1**
(45) Veröffentlichungstag und Bekanntmachung des Hinweises auf die Patenterteilung: **07.07.2021**
(21) Anmeldenummer: 12168953.3
(22) Anmeldetag: 22.05.2012
(51) Int. Cl.: C01B 39/24, B01D 53/02, B01J 20/18, B01J 29/08

(54) **Bindemittelfreies zeolithisches Granulat mit Faujasitstruktur und Verfahren zur Herstellung eines derartigen bindemittelfreien zeolithischen Granulats nebst Verwendung**
Adhesive-free zeolithic granulate with faujasite structure and method for producing such an adhesive-free zeolithic granulate and use of same
Granulé zéolithique sans liant avec structure faujasite et procédé de fabrication d'un tel granulé zéolithique sans liant et son utilisation

(30) Priorität: 25.05.2011 DE 102011103149
(43) Veröffentlichungstag der Anmeldung: 28.11.2012
(73) Patentinhaber: Chemiewerk Bad Köstritz GmbH, 07586 Bad Köstritz (DE)
(72) Erfinder: Gleichmann, Kristin, 07551 Gera (DE); Brandt, Alfons, 07552 Gera (DE); Unger, Baldur, 06846 Dessau-Roßlau (DE)
(74) Vertreter: Kruspig, Volkmar

(56) Entgegenhaltungen:
- WO-A1-92/12928
- WO-A1-2009/109529
- DE-A1- 3 028 785
- US-A- 5 098 894
- B. UNGER ET AL: "Zeolithe als Sorptionsmittel", CHEMIE INGENIEUR TECHNIK, Bd. 82, Nr. 6, 30. April 2010 (2010-04-30) , Seiten 929-940, XP055102496, ISSN: 0009-286X, DOI: 10.1002/cite.201000013
- None

## Beschreibung

Die Erfindung betrifft ein bindemittelfreies zeolithisches Granulat mit Faujasit-struktur, ein Verfahren zur Herstellung eines derartigen bindemittelfreien zeolithischen Granulats sowie die Verwendung entsprechender Granulate in technischen Prozessen.

Zeolithische Adsorptionsmittel haben auf Grund ihrer hohen chemischen und thermischen Beständigkeit, dem vorliegenden regelmäßigen Porensystem im Subnanometerbereich sowie der Möglichkeit zur Ausbildung spezifischer Wechselwirkungen mit adsorbierten Molekülen u.a. auf Grund einer variablen Kationenzusammensetzung hohe wirtschaftliche Bedeutung (Roskill; The Economics of Zeolites, Sixth Edition, Inf. Serv. Ltd., London, UK 2003).

Zeolithe werden in bewährter Art und Weise sowohl in statischen z.B. Isolierglasfenster als auch in regenerativ-dynamischen (Trocknung und Reinigung von Gasen und Flüssigkeiten sowie zur Stofftrennung; K. Schumann, B. Unger, A. Brandt; CIT 2010, 82, 6, 929-940) Adsorptionsprozessen eingesetzt. Die zitierte Veröffentlichung gibt keine Hinweise zu bindemittelfreien zeolithischen Granulaten des Typs NaY.

Neueste Entwicklungen beziehen sich z.B. auf die thermisch-chemische Energiespeicherung (DE-Patent 3 521 448; "Heizung Lüftung Klimatechnik": 6-7, 2006, 52; Geschirrspüler mit Zeolith-Trocknungstechnologie; BSH Medienfrühstück, Januar 2009).

Zeolithe im Allgemeinen gehören einer Klasse von kristallinen Alumosilikaten an, die ursprünglich als natürliches Mineral entdeckt wurden. Wirtschaftliches Interesse haben jedoch hauptsächlich synthetische Zeolithe erlangt. Unter der der Erfindung zu Grunde liegenden Faujasit-Struktur werden zwei Zeolithtypen verstanden, die sich in der chemischen Zusammensetzung unterscheiden. So werden Produkte mit einem molaren SiO₂/Al₂O₃-Verhältnis unter 3,0 als X-Zeolithe und solche mit einem molaren SiO₂/Al₂O₃-Verhältnis größer 3,0 als Y-Zeolithe bezeichnet. Je höher das molare SiO₂/Al₂O₃-Verhältnis der Faujasitzeolithe ist, desto größer ist die hydrothermale Stabilität des Materials (D. N. Stamires; Clays and Clay Minerals 1973, 21, 379-389).

Wegen der Adsorptionseigenschaften (Selektivität, Adsorptionskapazität), die Zeolithe aufweisen und die für Adsorptionsprozesse notwendig sind, ist es erstrebenswert zeolithische Molekularsiebe auf die reine Zeolithkomponente zu beschränken. In statischen Adsorptionsprozessen kann dies durch Einsatz von Zeolithpulvern (Primärform nach der Synthese) gewährleistet werden. Da Zeolithpulver jedoch keine Bindefähigkeit zeigen und von hohen Druckverlusten über Pulverschüttungen ausgegangen werden muss, ist dies in regenerativ-dynamischen Prozessen (in durchströmten Adsorberbetten) nicht oder nur begrenzt möglich, sodass klassischerweise auf, durch Hilfsmittel/ Bindemittel zu Formkörper verarbeitete Molekularsiebe zurück gegriffen werden muss (A. Pfenninger in Molecular Sieves - Science and Technology", Bd. 2, Springer-Verlag, 1999, 163.) Bei der Verwendung solcher Formkörper steht man vor der Herausforderung einen Kompromiss zwischen einem schnellen regenerativ-dynamischen Prozess durch Formkörper, die zudem noch Mindestanforderungen bezüglich ihrer mechanischen Eigenschaften wie Staubanteil, Abrieb, Druckfestigkeit oder Schüttdichte genügen müssen und einer durch das Einführen des erwähnten Bindemittels verursachten "Verdünnung" der Aktivkomponente in Verbindung mit der Beeinträchtigung der eigentlich gewünschten Ad- und Desorptionsprozesse an der reinen Zeolithkomponte durch Ausbildung eines unvorteilhaften Transportporensystems (hoher Anteil an Mesoporen (2 nm bis 50 nm)), einzugehen. Ein gut ausgeprägtes Transportporensystem für dynamische Adsorptionsprozesse ist durch möglichst viele Makroporen (>50 nm) gekennzeichnet (D. Bathen, M. Breitbach, "Adsorptionstechnik", Springer-Verlag, 2001, 13).

Hochporöse Formkörper können beispielsweise durch Zumischen von Porenbildern zur Zeolithpulver-Bindemittel-Mischung vor der Formgebung klassischer bindemittelhaltiger Molekularsiebe hergestellt werden. Beim anschließenden thermischen Abbinden des mineralischen Bindemittels und der gleichzeitig ablaufenden thermischen Aktivierung des Molekularsiebs wird der Porenbildner ausgebrannt und hinterlässt ein entsprechendes Porensystem (JP-Patent 62 283 812, 1987). Es besteht auch die Möglichkeit des Einsatzes von wasserlöslichen Porenbildern (US-Patent 3 119 660).

Die Nachteile des Standes der Technik (die Verwendung von bindemittelhaltigen Molekularsieben) sind zum einen der Verdünnungseffekt, da ein merklicher Anteil adsorptiv inerten Materials zur Verfestigung der Formkörper eingeführt wird und zum anderen das durch das Bindemittel bedingte unvorteilhaft ausgeprägte Transportporensystem, welches nur mit Hilfe von zusätzlichen Porenbildnern umgangen werden kann. Der Einsatz von Porenbildnern bedeutet jedoch zusätzliche Kosten und kann selbst oder bedingt durch den Ausbrennvorgang die Qualität des Molekularsiebes negativ beeinträchtigen.

Um diese Problematik zu überwinden, sind Technologien bekannt, den Aktivkomponentenanteil in entsprechenden Formkörpern zu erhöhen. Speziell zur Herstellung bindemittelfreier Molekularsiebe vom Zeolithtyp Y sind ebenfalls Herstellverfahren bekannt.

Eine Möglichkeit zur Herstellung von bindemittelfreiem Zeolith Y besteht darin, ein temporäres Bindemittel zur Formgebung einzuführen, welches anschließend in Zeolith Y umgewandelt wird.

Im US-Patent 5 665 325 werden silicatgebundene Extrudate verwendet, die aus 20% amorpher Kieselsäure bestehen, die nach einer Kalzinierung bei 525 °C in einer Natriumaluminiumlösung bei erhöhter Temperatur in zu insgesamt 93% Zeolith Y (XRD) umgewandelt werden.

Im US-Patent 3 119 660 wird die Herstellung bindemittelfreier Zeolith Y-Formkörper beschrieben, die darauf beruht, dass Zeolith Y-Pulver, Kaolin oder Metakaolin, eine zusätzliche Silicatquelle und Porosierungsmittel vermischt und verformt werden und während einer chemischen Reaktion die nichtzeolithischen Komponenten zu reinen Zeolith Y reagieren. Nachteil dieser Herstellmethode ist das zusätzliche Kosten verursachende eingesetzte Porosierungsmittel, welches, um reine Zeolithformkörper zu erhalten, wieder entfernt werden muss. Bei einem ähnlichen Verfahren wird der zu verformenden Mischung zusätzlich Attagpulgit zugefügt (US Patent 4 818 508). Dieser Binder kann nicht in Zeolith Y umgewandelt werden und erlaubt somit keine reinen Zeolithformkörper.

Formkörper die maximal 200 µm im Durchmesser zeigen, können durch Sprühtrocknung einer Suspension aus Metakaolin und Natriumsilicat und anschließender thermischer und chemischer Behandlung erlangt werden (US-Patent 3 472 617). Aufgrund des geringen Formkörperdurchmessers und des hohen Druckverlustes über einem Adsorberbett ist die Anlagengröße limitiert.

EP Patent 0 226 195 beschreibt eine Slurry, bei der als Struktur induzierende Substanz anstelle von Zeolith Y-Pulver eingesetzt wird, und mit einer Aluminiumquelle vermischt, verformt und die Formkörper in Zeolith umgewandelt werden. Auf diese Art und Weise hergestellte Substanzen sind metastabil und können die Reproduzierbarkeit beeinträchtigen.

Außerdem kann mit Hilfe Struktur dirigierender Substanzen (z.B. Kronenether) die Herstellung bindemittelfreier Zeolith Y-Formkörper durchgeführt werden, die der Umwandlungslösung für silicatgebundene Zeolith Y-Formkörper zugegeben werden (US-Patent 6 350 428).

Eine weitere Möglichkeit die Nachteile des mineralischen Bindemittels zu umgehen, ist die Herstellung gemischter bindemittelfreier Molekularsiebe bestehend aus Zeolith (US 3 773 690; US 4 058 586). Da bei solchen Formkörpern kein reiner Zeolith vorliegt, sind die Adsorptionseigenschaften nicht spezifisch.

Aus der DE 30 28 785 A1 ist ein Verfahren zur Herstellung von zeolithisierten Verbund-Formkörpern vorbekannt. Bindemittelfreie, zeolithische Granulate sind mit dem Verfahren nach der DE 30 28 785 A1 nicht herstellbar.

Zeolithische Granulate mit einer Faujasit-Struktur, welche als Katalysator oder Adsorbent verwendet werden, sind aus der WO 92/12928 A1 vorbekannt. Auf die Thematik Transportporendurchmesser sowie Mesoporen-Anteil wird in diesem Stand der Technik nicht eingegangen.

Die WO 2009/109529 A1 zielt auf Zeolithe vom Typ X. Konkret geht es dort um ein Adsorptionsmittelgranulat auf Basis von Zeolithen mit Faujasit-Struktur und einem molaren SiO₂/Al₂O₃-Verhältnis ≥ 2,1 - 2,5.

Aus der US 5 098 894 A ist ein Verfahren zur Herstellung eines bindemittelfreien zeolithischen Extrudates vom Typ TSZ zur Verwendung als Katalysator bekannt, welches nach der Verformung einer hydrothermalen Behandlung unterzogen wird.

Aus dem geschilderten Stand der Technik ist es Aufgabe der Erfindung, ein alternatives neuartiges bindemittelfreies zeolithisches Granulat mit Faujasitstruktur und ein Verfahren zur Herstellung eines solchen Granulats anzugeben, welches Formkörper ausbildet, die tatsächlich ohne Bindemittel vorliegen, und zwar mit einem molaren SiO₂/Al₂O₃-Verhältnis von >3,0 sowie einem mittleren Durchmesser der Granulat-Formkörper von >400 µm.

Das anzugebende Granulat soll kostengünstig herstellbar und mechanisch stabil sein und über einen maximalen Gehalt an aktivem Zeolithmaterial mit Faujasitstruktur und dem vorstehend erwähnten SiO₂/Al₂O₃-Verhältnis verfügen.

Mit dem zu schaffenden Granulat soll insbesondere eine hocheffizientes Adsorptionsmittel in technischen Adsorptionsprozessen, zur thermisch-chemischen Energiespeicherung sowie als Katalysator oder Katalysatorkomponente bereitgestellt werden.

Die Lösung der Aufgabe der Erfindung erfolgt durch ein Granulat gemäß der Merkmalskombination nach Anspruch 1 und einem Verfahren zur Herstellung eines bindemittelfreien zeolithischen Granulats gemäß der Lehre des Anspruchs 3, wobei die Unteransprüche zweckmäßige Ausgestaltungen und Weiterbildungen darstellen.

Die Lösung der gestellten Aufgabe umfasst in einer bevorzugten Variante das intensive Vermischen von pulverförmigen Zeolith vom Typ NaY mit einem molaren SiO₂/Al₂O₃-Verhältnis von > 3,0 mit einem pulverförmigen Metakaolin mit anschließender Zugabe einer Lösung bestehend aus Natriumsilicat und vorzugsweise Natronlauge, der abermals ein intensives Mischen folgt. Diese Mischung wird auf übliche Weise unter Zusatz von Wasser zu Granulat verformt, getrocknet, vorzugsweise gewässert und mit einer Lösung bestehend aus Natriumsilicat und Natronlauge behandelt. Abschließend wird das Material von der Lösung getrennt, gewaschen, getrocknet und getempert.

Die Lösung der gestellten Aufgabe kann alternativ durch intensives Vermischen von pulverförmigen Zeolith vom Typ NaY mit einem molaren SiO₂/Al₂O₃-Verhältnis von > 3,0 mit einem pulverförmigen Kaolin mit vorzugsweise anschließender Zugabe einer Natronlauge, der abermals ein intensives Mischen folgt, realisiert werden. Diese Mischung wird auf übliche Weise unter Zusatz von Wasser zu regelmäßig geformten Granulat verformt, getrocknet, zur Umwandlung des Kaolins in Metakaolin thermische behandelt, vorzugsweise gewässert und mit einer Lösung bestehend aus Natriumsilicat und Natronlauge behandelt. Abschließend wird das Material von der Lösung getrennt, gewaschen, getrocknet und getempert.

Überraschend wurde festgestellt, dass die so hergestellten mindestens 400 µm großen Formkörper neben den geforderten Eigenschaften, auch ohne Verwendung eines Porosierungsmittels ein optimales Transportporensystem mit einem vernachlässigbar kleinem Anteil an Mesoporen und einem hohen Anteil an Makroporen aufweisen und somit ein optimales Transportporensystem für Ad- und Desorptionsprozesse besitzen.

Das entwickelte Granulat weist für Wasser, Kohlendioxid und Stickstoff unter vergleichbaren Messbedingungen gleiche statische Adsorptionskapazitäten auf wie Zeolithpulver des gleichen Typs und gleichen molaren SiO₂/Al₂O₃-Verhältnis.

Im Folgenden wird das erfinderische Verfahren anhand von Beispielen näher erläutert:
Getrocknetes Zeolithpulver vom Typ NaY mit einem molaren SiO₂/Al₂O₃-Verhältnis von > 3,0, vorzugsweise mit einem molaren SiO₂/Al₂O₃-Verhältnis zwischen 5,0 und 5,5, wird als Ausgangsmaterial eingesetzt. Der beschriebene Zeolith NaY kann auch als Filterkuchen oder Slurry eingesetzt werden, wobei der entsprechende Feuchtegehalt bei der Berechnung der Zusammensetzung der Granuliermischung berücksichtigt werden muss.

Bei dem zweiten Ausgangsmaterial handelt es sich um thermisch behandelten Kaolin (Metakaolin), der aus kommerziell verfügbarem Rohkaolin gewonnen wird. Für die Eigenschaften des herzustellenden Produktes ist es nötig diesen Rohstoff auf nicht-kaolinitische Bestandteile, beispielsweise Glimmer oder Quarz, zu testen. Solche Fremdbestandteile sollten einen Gehalt von < 5 Ma.-%, vorzugsweise von < 1 Ma.-%, nicht überschreiten.

Der Temperaturbereich für die thermische Behandlung des Rohkaolins sollte zwischen 550 °C und 850 °C, vorzugsweise zwischen 620 °C und 800 °C liegen. Dabei sinkt der Glühverlust von ca. 14% auf ca. 1% und es wird die amorphe Metakaolinstruktur erhalten.
Der Metakaolin wird mit der Zeolithkomponente in einem Massenverhältnis von 1:1 bis 1:9, vorzugsweise 1:1,5 bis 1:3,5 (bezogen auf das wasserfreie Material der Ausgangsstoffe) sowie vorzugsweise einer zusätzlichen Siliciumquelle und vorzugsweise Natronlauge in den dem Stand der Technik entsprechenden Aggregaten wie beispielsweise in einem Trommel-, Wirbel-oder Pflugscharmischer vermischt. Eine intensive Vermischung ist für das Gelingen der Herstellung bindemittelfreier Zeolith NaY-Molekularsiebe mit einem molaren SiO₂/Al₂O₃-Verhältnis von > 3,0 Voraussetzung.

In einem Granulieraggregat (z. B. Misch-, Teller- oder Wirbelgranulator) wird das beschriebene Gemisch, gegebenenfalls mit Hilfe von Wasser zu gleichmäßig geformten Granulat verformt. Da Metakaolin eine geringere Binderwirkung als Kaolin aufweist, ist es vorteilhaft, die zusätzliche Siliciumquelle mit zusätzlicher Binderwirkung (z. B. Natronwasserglas) auszuwählen, um eine möglichst hohe mechanische Stabilität der den temporären Bindemittel enthaltenen Zeolith NaY-Formkörper zu garantieren.

Anschließend wird das erhaltene Granulat bei Temperaturen von 10 °C bis 100 °C, vorzugsweise bei 45 °C bis 85 °C getrocknet.

Das getrocknete Granulat wird danach vorzugsweise einer Wässerung unterzogen. Dazu wird das Material in einem Rührgefäß oder in einer mit Granulat gefüllten Säule kontinuierlich mit Wasser oder einer verdünnten Natronlauge (zwischen 0,01% und 10%, vorzugsweise zwischen 0,5 und 5%iger NaOH-Lösung) durchströmt.

Das Masseverhältnis vollentsalztes Wasser / Natronlauge zu Granulat liegt bei 5:1 bis 50:1, vorzugsweise zwischen 8:1 und 18:1. Die Wässerung erfolgt bei einer Temperatur zwischen 15 °C und 40 °C, vorzugsweise bei Raumtemperatur. Innerhalb von 3 min bis 120 min, vorzugsweise von 15 min bis 60 min ist der Wässerungsvorgang abgeschlossen. Das gewässerte Granulat wird vorzugsweise in einer wässrigen Lösung bestehend aus Natriumsilicat und Natronlauge gealtert. D. h., das Material wird bei 15 °C bis 60 °C, vorzugsweise zwischen 20 °C und 35 °C für 0,5 h bis 24 h, vorzugsweise für 1 h bis 5 h ruhen gelassen.

Die anschließende Zeolithisierung des temporären Bindemittels kann in einem geeigneten Reaktionsgefäß, vorzugsweise einem Rührgefäß oder auch in einer kontinuierlich mit der Reaktionslösung ähnlicher Konzentration oder der selben Lösung wie sie für die Alterung verwendet wurde, durchströmten, mit dem Granulat gefüllten Säule, durchgeführt werden. Dabei liegt das Masseverhältnis Reaktionslösung zu Granulat zwischen 5:1 bis 50:1, vorzugsweise 8:1 bis 18:1. Die Reaktionstemperatur ist zwischen 75 °C und 100 °C, vorzugsweise zwischen 80 °C und 95 °C zu wählen. Die Zeit zum Erreichen des bindemittelfreien Molekularsiebs liegt zwischen 8 h und 48 h. Nach Ende der Reaktionszeit wird das Granulat mit vollentsalztem Wasser so lange gewaschen bis der pH-Wert unter 12 liegt. Ein vorgeschalteter Waschschritt mit verdünnter Natronlauge einer Konzentration zwischen 0,01% und 10%, vorzugsweise zwischen 0,5 und 5%iger NaOH-Lösung reduziert die Waschwassermenge.

Die verbrauchte Behandlungslösung aus dem Umwandlungsschritt kann aufgearbeitet und für einen folgenden Behandlungsschritt mit neuem Granulat wieder verwendet werden.

Das gewaschene Granulat wird vom Waschwasser abgetrennt, getrocknet und getempert. Die Temperaturen des Trocknungs- und Temperungsschrittes sind so zu wählen, dass das Material keine thermische oder hydrothermale Schädigung erfährt. Dies kann durch Durchströmen der verwendeten Aggregate mit trockener Luft oder Inertgas und schrittweise Temperaturerhöhung erreicht werden. Die Bedingungen der Temperung müssen so gestaltet werden, dass die geforderte Restfeuchte im Endprodukt von üblicherweise < 1 Ma-% nicht überschritten wird. Im Fall des erfindungsgemäß hergestellten Materials sind Temperaturen bis maximal 450 °C ausreichend.

Wird an Stelle von Metakaolin auf Kaolin als Ausgangsmaterial zurückgegriffen, ist es ebenfalls für die Eigenschaften des herzustellenden Produktes nötig diesen Rohstoff auf nicht-kaolinitische Bestandteile, beispielsweise Glimmer oder Quarz, zu testen. Solche Fremdbestandteile sollten einen Gehalt von < 5 Ma.-%, vorzugsweise von < 1 Ma.-%, nicht überschreiten. Die thermische Behandlung des Kaolins erfolgt nach der Trocknung des Granulates, d.h. der Kaolin und die Zeolithkomponente werden in einem Massenverhältnis von 1:1 bis 1:9, vorzugsweise 1:3,5 bis 1:7 (bezogen auf das wasserfreie Material der Ausgangsstoffe) intensiv vermischt, und vorzugsweise mit zusätzlicher Natronlauge versetzt. Diese Mischung wird ebenfalls intensiv gemischt, wie oben beschrieben verformt, getrocknet und bei Temperaturen zwischen 550 °C und 850 °C, vorzugsweise zwischen 550 °C und 700 °C behandelt. Die anschließenden Verfahrensschritte sind identisch zu den oben beschriebenen.

Die folgenden Beispiele dienen der weiteren Erläuterung der Erfindungslehre.

### Ausgangsmaterial:

Das eingesetzte kommerziell erhältliche Zeolith NaY-Pulver (CBV100, Zeolyst International) weist folgende Eigenschaften auf:

| | |
|---|---|
| molares SiO₂/Al₂O₃-Verhältnis (RFA) | 5,3 |
| Wasseraufnahmekapazität (1 h, 450 °C; 24 h, 55% rel. Feuchte) | 29,1% |
| d₅₀ | 4,5 µm |
| LOI (1h, 950 °C) | 25,2% |

### Vergleichsbeispiel:

Beim Vergleichsbeispiel handelt es sich um ein konventionelles tongebundenes Molekularsieb des Zeolithtyps NaY auf Basis des oben angegebenen Zeolithpulvers sowie dem Bindemittel Attapulgit (Typ Clarsol (Zeoclay) ATC NA, CECA; 17 Ma-% bezogen auf das eingesetzte Zeolithpulver im aktivierten Zustand). Der Korngrößenbereich des im Produktionsmaßstab hergestellten Materials beträgt 1,6 - 2,5 mm. Die Aktivierung fand in einem Bandofen beim Durchlaufen verschiedener Temperaturzonen bei einer Endtemperatur von 540 °C statt.

### Erfindungsgemäßes erstes Beispiel:

Zur Herstellung der Ausgangsformkörper werden 2318 g Zeolith NaY-Pulver und 848 g Metakaolin (Kaorock, Solvadis GmbH, Glühverlust 1%, mittlere Teilchengröße 2,9 µm) in einem Eirich-Mischer R02 gemischt. Anschließend wird eine Lösung bestehend aus 66 g Natronlauge (50%ig) und 768 g Natronwasserglas (27,5% SiO₂, 8,3% Na₂O) unter intensivem Rühren zugegeben.

Die Granulation setzt durch Zugabe kleiner Mengen Wasser ein. Nach Erreichen der gewünschten Korngröße von 1,6 - 2,5 mm wird das noch feuchte Material mit einem Gemisch aus Zeolith NaY-Pulver, Metakaolin, Natronwasserglas und Natronlauge (Zusammensetzung wie oben beschrieben) rieselfähig "gepudert". Das auf diese Weise erhaltene Rohgranulat wird auf die Fraktion 1,6 - 2,5 mm gesiebt und das Gutkorn innerhalb von 20 h bei 60 °C (Schichtdicke ca. 2 cm) im Trockenschrank getrocknet.

Bevor die Zeolithisierung an 30 g getrockneten Rohgranulat durchgeführt werden kann, wird es drei mal mit je 200 mL vollentsalztem Wasser gewässert und weitere 30 min 300 mL vollentsalztes Wasser über dem Granulat belassen. Nach Ablauf der vorgegebenen Zeit wird das Wasser weitestgehend abgegossen und durch die Reaktionslösung ersetzt. Diese Lösung besteht aus 196 mL vollentsalztem Wasser, 68,8 g Natronwasserglas (27,5% SiO₂, 8,3% Na2O) und 9,2 g Natronlauge (50%ig). Das gewässerte Granulat wird in dieser Lösung 2 h bei Raumtemperatur gealtert und anschließend auf 90 °C erhitzt und bei dieser Temperatur für 20 h gehalten.

Nach Ablauf der Reaktionszeit wird das Material abgekühlt und die überstehende Lösung durch Dekantieren entfernt. Das Granulat wird drei mal mit je 200 mL vollentsalztem Wasser gewaschen, mit Hilfe von Unterdruck über einen Büchner-Trichter möglichst trocken filtriert und anschließend unter einer IR-Lampe vollkommen getrocknet.

Das auf diese Weise hergestellte Material zeigt eine Kristallinität (XRD) bezogen auf das Ausgangszeolithpulver von 100%.

In folgender Tabelle ist ein Vergleich zwischen dem Ausgangszeolithpulver, den tongebundenen (Vergleichsbeispiel) sowie dem bindemittelfreien Zeolith NaY wiedergegeben.

**Tab. 1: Vergleich zwischen Zeolith NaY-Pulver, bindemittelhaltigem und bindemittelfreien Zeolith NaY.**

| | Zeolith NaY-Pulver | Tongebunder Zeolith NaY | Bindemittelfreier Zeolith NaY |
|---|---|---|---|
| Kristallinität (XRD bezogen auf das Zeolith NaY-Ausgangspulver) / % | 100 | 83 | 100 |
| molares SiO₂/Al₂O₃-Verhältnis | 5 , 3 | - | 5,3 |
| Druckfestigkeit / N | - | 25 | 39 |
| Wasseraufnahmekapazität / Ma-% | 29,1 | 25,5 | 29,7 |
| Porenvertei lung | siehe Abb. 1 | | |

| | | | |
|---|---|---|---|
| Kristallinität: Röntgenpulverdiffraktometer "D4 ENDEAVOR" der Fa. Bruker-AXS GmbH, Karlsruhe, Softwarepaket "DIFFRACplus" molares SiO₂/Al₂O₃-Verhältnis: Röntgenfluoreszensspektrometer "S4 EXPLORER" der Fa. Bruker-AXS GmbH, Karlsruhe, Softwarepaket "SPECplus" Druckfestigkeit: Die Prüfkörper werden auf die untere Druckplatte eines Prüfgerätes gelegt und die obere Platte wird mit einer Geschwindigkeit von 20 mm/min abgesenkt und die bei dem Bruch des Körpers wirkende Kraft ermittelt. Wasseraufnahmekapazität: Das Material wird 1 h bei 450 °C aktiviert und bei 55% relativer Feuchte innerhalb von 24 h rückbefeuchtet und ausgewogen. Mittlerer Porendurchmesser: Hg-Porosimeter PASCAL P140, -P440 der Firma Porotec. | | | |

Aus den Ergebnissen entsprechend Tab. 1 geht hervor, dass die erfindungsgemäßen Produkte erstaunlicherweise auch ohne mineralisches Bindemittel eine Festigkeit aufweisen, die denen konventioneller Produkte entspricht oder besser ist. Die statische Wasseradsorptionskapazität ist identisch oder besser als die des Ausgangszeolithpulvers.

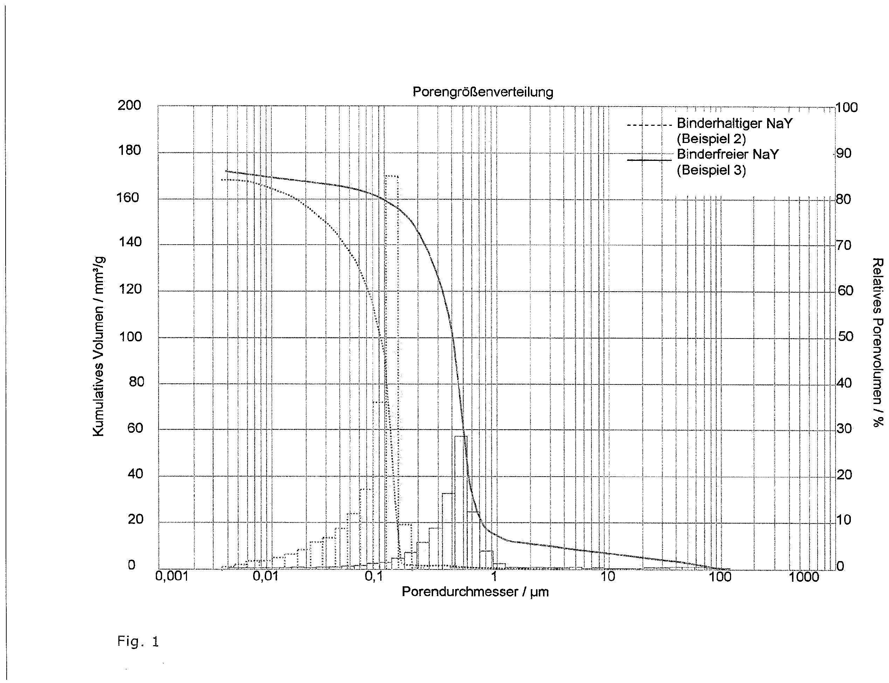

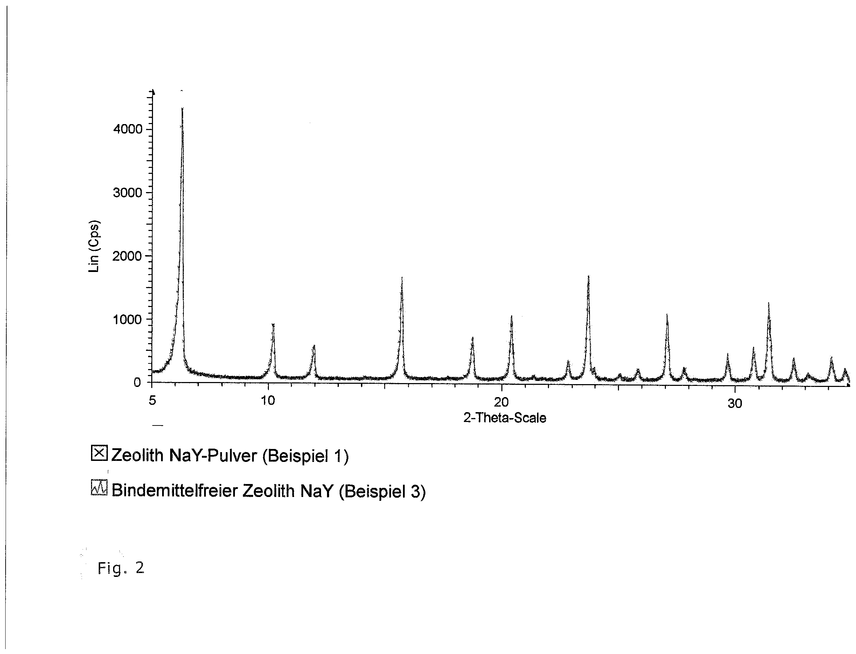

Fig. 1 zeigt das im Vergleich zu bindemittelhaltigem Molekularsieb verbesserte Transportporensystem. Fig. 2 bestätigt die Phasenreinheit des neu entwickelten Materials.

### Erfindungsgemäßes zweites Beispiel:

Die Durchführung erfolgt analog zu Beispiel 1. Zusätzlich wird nach Ablauf der Reaktionszeit und dem Dekantieren der überstehenden Lösung das Granulat vor der Wäsche mit 150 mL einer 1%igen Natronlauge behandelt. Die notwendige Wassermenge für die anschließende Wäsche mit vollentsalztem Wasser reduziert sich auf 200 mL. Die Analysenergebnisse entsprechen denen aus Beispiel 3.

### Erfindungsgemäßes drittes Beispiel:

Die Durchführung erfolgt analog zu Beispiel 1. Die Zusammensetzung variiert folgendermaßen.

Zusammensetzung Mischung für Granulation:
2318 g Zeolith NaY-Pulver
848 g Metakaolin
1614 g Natronwasserglas (27,5% SiO₂, 8,3% Na₂O)
10 g Natronlauge (50%ig)

Zusammensetzung Reaktionslösung für 30 g getrocknetes Rohgranulat:
182 mL vollentsalztes Wasser
56,8 g Natronwasserglas (27,5% SiO₂, 8,3% Na₂O)
8,5 g Natronlauge

Der erhaltene bindemittelfreie Zeolith NaY besteht zu 93% aus Zeolith NaY (XRD) und weist ein molares SiO₂/Al₂O₃-Verhältnis von 5,2, eine Wasseraufnahmekapazität von 29,1% sowie eine Druckfestigkeit von 56 N auf.

### Erfindungsgemäßes viertes Beispiel:

Die Durchführung erfolgt analog zu Beispiel 1. Die Zusammensetzung variiert folgendermaßen:
Zusammensetzung Mischung für Granulation:
   2318 g Zeolith NaY-Pulver
   848 g Metakaolin
   768 g Natronwasserglas (27,5% SiO₂, 8,3% Na₂O)
   66 g Natronlauge (50%ig)
Zusammensetzung Reaktionslösung für 30 g getrocknetes Rohgranulat:
   275 mL vollentsalztes Wasser
   68,8 g Natronwasserglas (27,5% SiO₂, 8,3% Na₂O)
   9,2 g Natronlauge

Der erhaltene bindemittelfreie Zeolith NaY besteht zu 102% aus Zeolith NaY (XRD) und weist ein molares SiO₂/Al₂O₃-Verhältnis von 5,1 sowie eine Wasseraufnahmekapazität von 29,5% und eine Druckfestigkeit von 67 N auf.

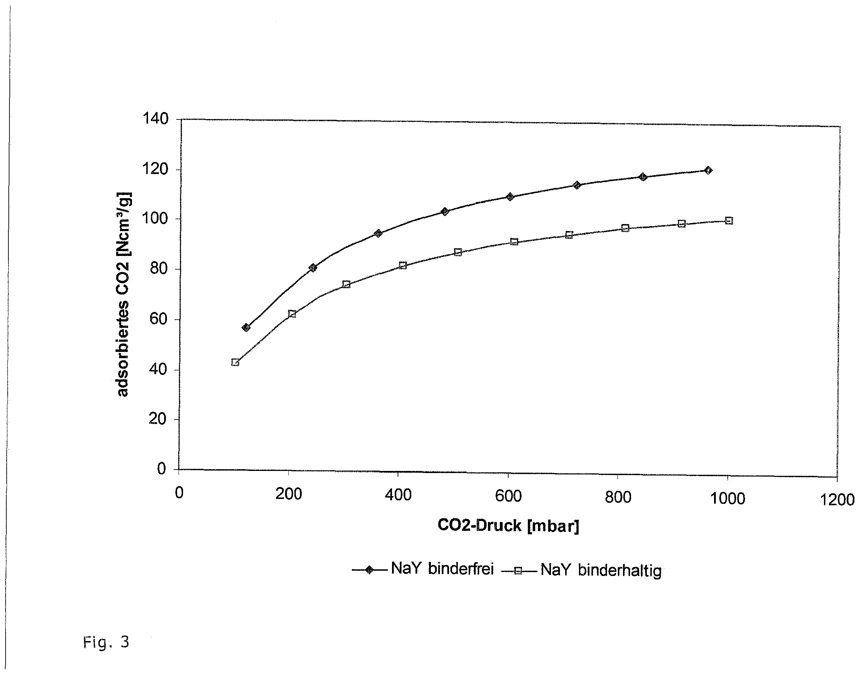

Das Material nach dem vierten Beispiel eignet sich zur CO₂-Adsorption (siehe Fig. 3).

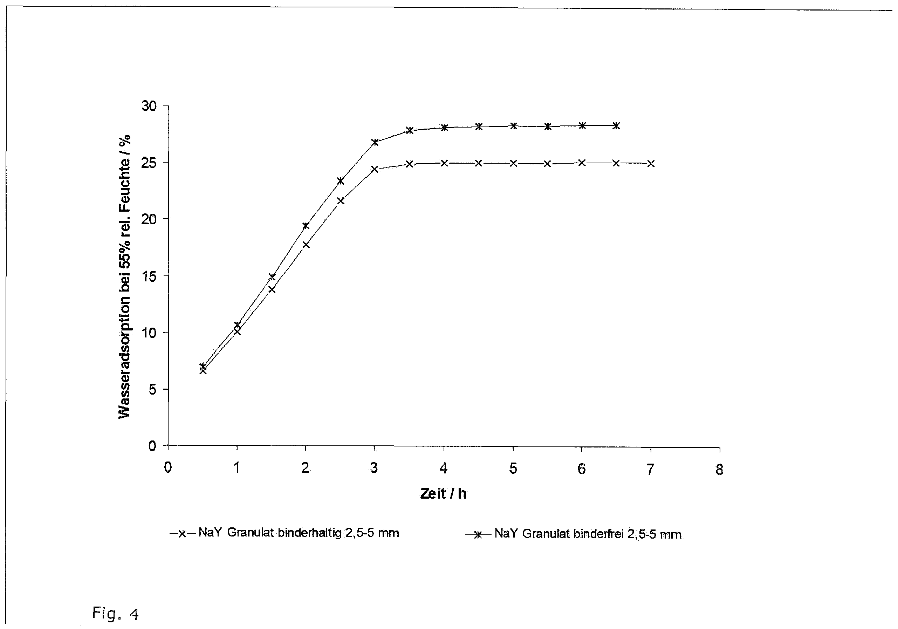

Beim Vergleich gemäß Fig. 4 wird deutlich, dass bindemittelfreier Zeolith NaY (Beispiel 4) schneller und eine größere Menge Wasser adsorbiert als bindemittelhaltiger, was Vorteile z.B. für die Nutzung zur thermisch-chemischen Energiespeicherung mit sich bringt.

Die hohe Adsorptionsgeschwindigkeit von Wasser an bindemittelfreien Zeolith NaY bestätigt nicht nur ein sehr weitporiges Transportporensystem, sondern auch die positiven Eigenschaften beim Einsatz als Adsorptionsmittel für die thermisch-chemische Energiespeicherung.
Zur Bestimmung der Adsorptionsgeschwindigkeit wurde der sog. Delta-T-Test heran gezogen, d.h., in einem isolierten Becherglas wurden 150 mL vollentsalztes Wasser vorgelegt und 100 g aktiviertes Zeolithgranulat zu gegeben. Die Temperatur des Wassers wurde im Vorfeld bestimmt und der Temperaturanstieg nach Vereinen von Wasser und Zeolith zeitlich verfolgt. Tab. 2 gibt Aufschluss über die Versuchsergebnisse:

**Tab. 2: Temperaturdifferenz und Zeit bis die Maximaltemperatur im Delta-T-Test an verschiedenen Zeolithgranulaten erreicht wird.**

| | Temperaturdifferenz / K | Zeit zum Erreichen der Maximaltemperatur / s |
|---|---|---|
| NaY binderhaltig | 30 | 24 |
| NaY binderfrei | 54 | 22 |

### Erfindungsgemäßes fünftes Beispiel:

Die Durchführung erfolgt analog zu Beispiel 1. Die Zusammensetzung variiert folgendermaßen:
Zusammensetzung Mischung für Granulation:
   2318 g Zeolith NaY-Pulver
   848 g Metakaolin
   768 g Natronwasserglas (27,5% SiO₂, 8,3% Na₂O)
   66 g Natronlauge (50%ig)
Zusammensetzung Reaktionslösung für 30 g getrocknetes Rohgranulat:
   125 mL vollentsalztes Wasser
   68,8 g Natronwasserglas (27,5% SiO₂, 8,3% Na₂O)
   9,2 g Natronlauge

Der erhaltene bindemittelfreie Zeolith NaY besteht zu 98% aus Zeolith NaY (XRD) und weist ein molares SiO₂/Al₂O₃-Verhältnisvon 5,3 sowie eine Wasseraufnahmekapazität von 29,5% und eine Druckfestigkeit von 32 N auf.

### Erfindungsgemäßes sechstes Beispiel:

Die Durchführung erfolgt analog zu Beispiel 1, jedoch ohne Wässerung.

Der erhaltene bindemittelfreie Zeolith NaY besteht zu 98% aus Zeolith NaY (XRD) und weist ein molares SiO₂/Al₂O₃-Verhältnis von 5,3 sowie eine Wasseraufnahmekapazität von 29,5% und eine Druckfestigkeit von 55 N auf.

### Erfindungsgemäßes siebentes Beispiel:

Die Durchführung erfolgt analog zu Beispiel 1, jedoch ohne Alterung.

Der erhaltene bindemittelfreie Zeolith NaY besteht zu 96% aus Zeolith NaY (XRD) und weist ein molares SiO₂/Al₂O₃-Verhältnis von 5,1 sowie eine Wasseraufnahmekapazität von 29,7% und eine Druckfestigkeit von 47 N auf.

### Erfindungsgemäßes achtes Beispiel:

Die Durchführung erfolgt analog zu Beispiel 1, da jedoch keine Trocknung des Granulates im Anschluss an die Verformung (Granulation) erfolgte, wurden statt 30 g 48 g Granulat eingesetzt, um mit gleicher Trockenmasse wie im Beispiel 1 die chemische Umwandlung durchzuführen.

Der erhaltene bindemittelfreie Zeolith NaY besteht zu 68% aus Zeolith NaY (XRD) und weist ein molares SiO₂/Al₂O₃-Verhältnis von 5,1 sowie eine Wasseraufnahmekapazität von 29,7% und eine Druckfestigkeit von 7 N auf.

### Erfindungsgemäßes neuntes Beispiel:

Die Durchführung erfolgt analog zu Beispiel 1. Die Zusammensetzung variiert folgendermaßen:
Zusammensetzung Mischung für Granulation:
   2872 g Zeolith NaY-Pulver
   1046 g Metakaolin
   82 g Natronlauge (50%ig)
Zusammensetzung Reaktionslösung für 30 g getrocknetes Rohgranulat:
   212 mL vollentsalztes Wasser
   83,1 g Natronwasserglas (27,5% SiO₂, 8,3% Na₂O)
   10,1 g Natronlauge

Die mechanische Stabilität geht während der Wässerung verloren, d.h. das Kugelgranulat zerfällt größtenteils während der Wässerung. Der erhaltene Zeolith NaY besteht zu 101% aus Zeolith NaY (XRD) und weist ein molares SiO₂/Al₂O₃-Verhältnisvon 5,4 sowie eine Wasseraufnahmekapazität von 28,8%.

### Erfindungsgemäßes zehntes Beispiel:

Die Durchführung erfolgt analog zu Beispiel 1. Die Alterungslösung wird jedoch nach der Alterung durch eine frische Lösung gleicher Ausgangskonzentration ausgetauscht.

Der erhaltene Zeolith NaY besteht zu 97% aus Zeolith NaY (XRD) und weist ein molares SiO₂/Al₂O₃-Verhältnisvon 5,3 sowie eine Wasseraufnahmekapazität von 28,7%. Die Druckfestigkeit beträgt 56 N.

### Erfindungsgemäßes elftes Beispiel:

Die Durchführung und die Zusammensetzung erfolgt analog zu Beispiel 1. Als Ausgangszeolithpulver wird Zeolith NaY-Pulver der Firma Chemiewerk Bad Köstritz GmbH mit folgenden Eigenschaften eingesetzt:

| | |
|---|---|
| molares SiO₂/Al₂O₃-Verhältnis (RFA) | 5,2 |
| Wasseraufnahmekapazität (1 h, 450 °C; 24 h, 55% rel. Feuchte) | 29,4% |
| d₅₀ | 9,9 µm |
| LOI (1h, 950 °C) | 18,1% |

Der erhaltene bindemittelfreie Zeolith NaY besteht zu 95% aus Zeolith NaY (XRD) und weist ein molares SiO₂/Al₂O₃-Verhältnisvon 5,3 sowie eine Wasseraufnahmekapazität von 28,4% und eine Druckfestigkeit von 46 N auf.

### Erfindungsgemäßes zwölftes Beispiel:

Zur Herstellung der Ausgangsformkörper werden 3166 g Zeolith NaY-Pulver und 748 g Kaolin (KF-2, Prosco, Glühverlust 13%) in einem Eirich-Mischer gemischt. Anschließend werden 86 g Natronlauge (50%ig) unter intensivem Rühren zugegeben.

Die Granulation setzt durch Zugabe kleiner Mengen Wasser ein. Nach Erreichen der gewünschten Korngröße von 2,5 - 5 mm wird das noch feuchte Material mit einem Gemisch aus Zeolith NaY-Pulver, Kaolin und Natronlauge (Zusammensetzung wie oben beschrieben) rieselfähig "gepudert". Das auf diese Weise erhaltene Rohgranulat wird auf die Fraktion 1,6 - 2,5 mm gesiebt und das Gutkorn innerhalb von 20 h bei 60 °C (Schichtdicke ca. 2 cm) im Trockenschrank getrocknet. Es schließt sich eine thermische Behandlung bei 650 °C für 3 h an.

Bevor die Zeolithisierung an 30 g getrockneten Rohgranulat durchgeführt werden kann, wird es drei mal mit je 200 mL vollentsalztem Wasser gewässert und weitere 30 min 300 mL vollentsalztes Wasser über dem Granulat belassen. Nach Ablauf der vorgegebenen Zeit wird das Wasser weitestgehend abgegossen und durch die Reaktionslösung ersetzt. Diese besteht aus 194 mL vollentsalzten Wasser, 73 g Natronwasserglas (27,5% SiO₂, 8,3% Na₂O) und 9 g Natronlauge (50%ig). Das gewässerte Granulat wird in dieser Lösung 2 h bei Raumtemperatur gealtert und anschließend auf 90 °C erhitzt und bei dieser Temperatur für 20 h gehalten.

Nach Ablauf der Reaktionszeit wird das Material abgekühlt und die überstehende Lösung durch Dekantieren entfernt. Das Granulat wird drei mal mit je 200 mL vollentsalztem Wasser gewaschen, mit Hilfe von Unterdruck möglichst trocken filtriert und anschließend unter einer IR-Lampe vollkommen getrocknet.

Das auf diese Weise hergestellte Material zeigt eine Kristallinität (XRD) bezogen auf das Ausgangszeolithpulver von 91% und eine Wasseraufnahmekapazität von 28,2%. Die Druckfestigkeit beträgt 84 N.

## Patentansprüche

1. Bindemittelfreies zeolithisches Granulat mit Faujasitstruktur, einem molaren SiO₂/Al₂O₃-Verhältnis von >3,0 sowie einer Korngröße von >400 µm, einem mittleren Transportporendurchmesser >150 nm sowie einem Mesoporenanteil unterhalb von 10%, mit einer mechanischen Stabilität, welche eine unmittelbare Verwendung oder Weiterverarbeitung ermöglicht.

2. Bindemittelfreies zeolithisches Granulat nach Anspruch 1,
**dadurchgekennzeichnet, dass**
die statische Adsorptionskapazität mindestens 95% des Wertes für ein vergleichbares Zeolithpulver gleichartiger Struktur und chemischer Zusammensetzung beträgt und die röntgenographische Kristallinität des Zeolithanteils im Granulat bei >85% liegt.

3. Verfahren zur Herstellung eines bindemittelfreien zeolithischen Granulats nach Anspruch 1 oder 2,
**dadurchgekennzeichnet, dass**
thermisch behandeltes Kaolin, welches ≤ 5 Masse-% nichtkaolinitisches Material enthalten darf, und ein Zeolith vom Typ NaY mit einem molaren SiO₂/Al₂O₃-Verhältnis von >3,0 als trockenes Pulver, Filterkuchen oder Slurry im Massenverhältnis von 1:1 bis 1:9, vorzugsweise 1:1,5 bis 1:3,5 bezogen auf das wasserfreie Material der Ausgangsstoffe, gemischt wird, diese Mischung dann mit einer niedrigviskosen Natriumsilicat-Natronlaugelösung vermengt und zu Granulat geformt wird, das Granulat einer Trocknung zwischen 10°C und 100°C unterzogen und anschließend gewässert sowie in einer Natriumsilicat- oder dergleichen Lösung gealtert, bei Temperaturen im Bereich zwischen 75°C und 100°C über einen Zeitraum von 1 bis 48 Stunden in einer Natriumsilicatlösung behandelt, dann das derart behandelte Granulat von der Lösung getrennt, anschließend gewaschen, getrocknet und getempert wird, wobei die Zusammensetzung des Gesamtsystems
Na₂O/SiO₂ = 0,15 bis 0,5
SiO₂/Al₂O₃ = 3,5 bis 9,3
H₂O/Na₂O = 10 bis 100
beträgt.

4. Verfahren nach Anspruch 3,
**dadurchgekennzeichnet, dass**
das Verhältnis der Lösung für die Wässerung zum Granulat 5:1 bis 50:1, vorzugsweise 8:1 bis 18:1 beträgt.

5. Verfahren nach einem der Ansprüche 3 oder 4,
**dadurchgekennzeichnet, dass**
die Dauer der Behandlung mit Natriumsilicatlösung durch den erreichten Umwandlungsgrad nicht-zeolithischer Granulatbestandteile in der gewünschten Zeolithmaterie festgelegt oder gewählt wird.

6. Verfahren nach Anspruch 3,
**dadurchgekennzeichnet, dass**
der Behandlung mit Natriumsilicatlösung vorhergehend ein Alterungsschritt über einen Zeitraum von 0,5 bis 24 Stunden, vorzugsweise von 1 bis 5 Stunden durchgeführt wird.

7. Verfahren nach Anspruch 3,
**dadurchgekennzeichnet, dass**
die Trocknung des Granulats in einem Temperaturbereich zwischen 45°C und 85°C erfolgt und die Wässerung mit entsalztem Wasser oder einer 0,01- bis 10%-igen, vorzugsweise 0,5- bis 5%-igen Natronlaugelösung vorgenommen wird.

8. Verfahren nach Anspruch 3,
**dadurchgekennzeichnet, dass**
die zur Alterung herangezogene Natriumsilicatlösung auch zur Behandlung im Verfahrensschritt nach dem Alterungsschritt eingesetzt wird.

9. Verfahren nach einem der Ansprüche 3 bis 8,
**dadurchgekennzeichnet, dass**
zur Trennung des Granulats von der Lösung 0,01- bis 10%-ige, vorzugsweise 0,5- bis 5%-ige Natronlaugelösung eingesetzt wird und der Waschschritt mit entsalztem Wasser erfolgt.

10. Adsorptionsmittel, enthaltend ein bindemittelfreies zeolithisches Granulat gemäß Anspruch 1 oder 2 oder ein Granulat, hergestellt nach einem der Ansprüche 3 bis 9.

11. Verwendung eines bindemittelfreien zeolithischen Granulats nach Anspruch 1 oder 2 in technischen Adsorptionsprozessen, oder als Molekularsieb in thermisch-chemischen Applikationen einschließlich der Kälteerzeugung.

12. Katalysator oder Katalysatorkomponente, enthaltend ein Granulat nach Anspruch 1 oder 2 oder ein Granulat, hergestellt nach einem der Ansprüche 3 bis 9.

## Claims

1. Binder-free zeolitic granulate exhibiting faujasite structure, a molar SiO₂/Al₂O₃ ratio of >3.0 and a grain size of >400 µm, a mean transport pore diameter >150 nm and a mesopore fraction below 10%, having a mechanical stability that allows immediate use or further processing.

2. Binder-free zeolitic granulate according to claim 1, **characterized in that** the static adsorption capacity is at least 95% of the value for a comparable zeolite powder of similar structure and chemical composition and the X-ray crystallinity of the zeolite fraction in the granulate is >85%.

3. Method for the production of a binder-free zeolitic granulate according to claim 1 or 2, **characterized in that** thermally treated kaolin, which may contain ≤ 5% by mass of non-kaolinitic material, and a zeolite of the NaY type having a molar SiO₂/Al₂O₃ ratio of >3.0 are mixed as dry powder, filter cake or slurry in a mass ratio of 1:1 to 1:9, preferably 1:1.5 to 1:3.5 based on the anhydrous material of the starting materials, this mixture is then mixed with a low-viscosity sodium silicate-sodium hydroxide solution and formed into granulate, the granulate is subjected to drying between 10°C and 100°C and then soaked in water and aged in a sodium silicate or similar solution, treated at temperatures in the range between 75°C and 100°C for a period of 1 to 48 hours in a sodium silicate solution, then the granulate thus treated is separated from the solution, then washed, dried and annealed, wherein the composition of the total system is
Na₂O/SiO₂ = 0.15 to 0.5
SiO₂/Al₂O₃ = 3.5 to 9.3
H₂O/Na₂O = 10 to 100.

4. Method according to claim 3, **characterized in that** the ratio of the solution for soaking in water to the granulate is 5:1 to 50:1, preferably 8:1 to 18:1.

5. Method according to one of claims 3 or 4, **characterized in that** the duration of treatment with sodium silicate solution is determined or selected by the degree of conversion achieved of non-zeolitic granular components in the desired zeolite material.

6. Method according to claim 3, **characterized in that** the treatment with sodium silicate solution is preceded by an aging step over a period of 0.5 to 24 hours, preferably of 1 to 5 hours.

7. Method according to claim 3, **characterized in that** the drying of the granulate is carried out in a temperature range between 45°C and 85°C and the soaking in water is carried out with desalinated water or a 0.01 to 10%, preferably 0.5 to 5% sodium hydroxide solution.

8. Method according to claim 3, **characterized in that** the sodium silicate solution used for aging is also used for treatment in the method step after the aging step.

9. Method according to one of claims 3 to 8, **characterized in that** 0.01 to 10%, preferably 0.5 to 5% sodium hydroxide solution is used to separate the granulate from the solution and the washing step is carried out with desalinated water.

10. Adsorbent, containing a binder-free zeolitic granulate according to claim 1 or 2 or a granulate prepared according to one of claims 3 to 9.

11. Use of a binder-free zeolitic granulate according to claim 1 or 2 in technical adsorption processes, or as a molecular sieve in thermal-chemical applications including refrigeration.

12. Catalyst or catalyst component comprising a granulate according to claim 1 or 2 or a granulate prepared according to one of claims 3 to 9.

## Revendications

1. Granulé zéolithique exempt de liant, présentant une structure de faujasite, un rapport molaire SiO₂/Al₂O₃ > 3,0 et une granulométrie > 400 µm, un diamètre moyen des pores de transport > 150 nm et une teneur en mésopores inférieure à 10 %, ayant une stabilité mécanique qui permet une utilisation immédiate ou un traitement ultérieur.

2. Granulé zéolithique exempt de liant selon la revendication 1,
**caractérisé en ce que**
la capacité d'adsorption statique est d'au moins 95 % de la valeur d'une poudre de zéolithe comparable de structure et de composition chimique similaires, et la cristallinité déterminée par radiographie aux rayons X de la teneur en zéolithe dans le granulé est > 85 %.

3. Procédé de préparation d'un granulé zéolithique exempt de liant selon la revendication 1 ou 2,
**caractérisé en ce que**
on mélange du kaolin traité thermiquement, qui peut contenir ≤ 5% en masse de matériau non kaolinitique, et une zéolithe du type NaY avec un rapport molaire SiO₂/Al₂O₃ > 3,0 sous forme de poudre sèche, de gâteau de filtration ou de boue (slurry) dans un rapport massique de 1 : 1 à 1 : 9, de préférence de 1 : 1,5 à 1 : 3,5 par rapport à la matière anhydre des matières de départ, ce mélange est ensuite mélangé à une solution de soude caustique de silicate de sodium de faible viscosité, et il est mis en forme de granulé, le granulé est soumis à un séchage entre 10 °C et 100 °C et est ensuite humidifié et vieilli dans une solution de silicate de sodium ou similaire, traité à des températures comprises entre 75 °C et 100 °C pendant une durée de 1 à 48 heures dans une solution de silicate de sodium, puis le granulé ainsi traité est séparé de la solution, puis lavé, séché et tempéré, la composition du système total étant essentiellement
Na₂O/SiO₂ = 0,15 à 0,5
SiO₂/Al₂O₃ = 3,5 à 9,3
H₂O/Na₂O = 10 à 100

4. Procédé selon la revendication 3,
**caractérisé en ce que**
le rapport de la solution pour l'humidification sur le granulé est de 5 : 1 à 50 : 1, de préférence de 8 : 1 à 18 : 1.

5. Procédé selon l'une des revendications 3 ou 4,
**caractérisé en ce que**
la durée du traitement avec la solution de silicate de sodium est fixée ou choisie en fonction du degré obtenu de conversion des constituants de granulé non zéolithiques en la matière zéolithique souhaitée.

6. Procédé selon la revendication 3,
**caractérisé en ce que**
le traitement avec la solution de silicate de sodium est précédé d'une étape de vieillissement sur une période de 0,5 à 24 heures, de préférence de 1 à 5 heures.

7. Procédé selon la revendication 3,
**caractérisé en ce que**
le séchage du granulé est effectué dans une plage de température comprise entre 45 °C et 85 °C, et l'humidification est effectuée avec de l'eau dessalée ou une solution de soude caustique de 0,01 à 10 %, de préférence de 0,5 à 5 %.

8. Procédé selon la revendication 3,
**caractérisé en ce que**
la solution de silicate de sodium utilisée pour le vieillissement est également utilisée pour le traitement dans l'étape du procédé après l'étape de vieillissement.

9. Procédé selon l'une des revendications 3 à 8,
**caractérisé en ce que**
une solution de soude caustique de 0,01 à 10 %, de préférence de 0,5 à 5 %, est utilisée pour séparer le granulé de la solution, et l'étape de lavage est effectuée avec de l'eau dessalée.

10. Adsorbant contenant un granulé zéolithique exempt de liant selon la revendication 1 ou 2 ou un granulé préparé selon l'une des revendications 3 à 9.

11. Utilisation d'un granulé zéolithique exempt de liant selon la revendication 1 ou 2 dans des processus techniques d'adsorption ou comme tamis moléculaire dans des applications thermochimiques, y comprise la production de froid.

12. Catalyseur ou composant catalyseur contenant un granulé selon la revendication 1 ou 2 ou un granulé préparé selon l'une des revendications 3 à 9.
